# EUROPÄISCHE PATENTSCHRIFT

(11) **EP 2 638 206 B1**
(45) Veröffentlichungstag und Bekanntmachung des Hinweises auf die Patenterteilung: **29.06.2016**
(21) Anmeldenummer: 11779460.2
(22) Anmeldetag: 09.11.2011
(51) Int. Cl.: F16C 13/02, D21G 1/00

(54) **WALZENANORDNUNG**
ROLL ASSEMBLY
ENSEMBLE DE CYLINDRES

(30) Priorität: 11.11.2010 DE 102010060494
(43) Veröffentlichungstag der Anmeldung: 18.09.2013
(73) Patentinhaber: Andritz Küsters GmbH, 47805 Krefeld (DE)
(72) Erfinder: KUBIK, Klaus, 47918 Tönisvorst (DE); HÜNNEKENS, Andre, 47638 Straelen (DE); SIEBERS, Ulrich, 47665 Sonsbeck (DE)
(74) Vertreter: Kluin, Jörg-Eden
(86) Internationale Anmeldenummer: PCT/EP2011/069758
(87) Internationale Veröffentlichungsnummer: WO 2012/062812

(56) Entgegenhaltungen:
- DE-C1- 4 033 638
- US-A- 3 889 334
- US-A- 4 414 890
- US-A- 4 691 421

## Beschreibung

Die Erfindung bezieht sich auf eine Walzenanordnung mit einer angetriebenen durchbiegungssteuerbaren Walze und einer Gegenwalze. Eine durchbiegungssteuerbare Walze mit einer zur Abteilung einer zwischen der Hohlwalze und dem Querhaupt gebildeten Längskammer dienenden, am Querhaupt angebrachten Dichtungsanordnung, die an den einander gegenüberliegenden Enden der Längskammern vorgesehene Endquerdichtungen sowie längs des Querhaupts und der Hohlwalze auf beiden Seiten der Wirkebene der Walze sich erstreckende Längsdichtungen umfasst, ist aus der DE 31 28 140 C2 bekannt. Sie entspricht bis auf Details der Dichtungsausbildung der normalen Ausführungsform der so genannten schwimmenden Walze. Der Antrieb der derartigen Walze erfolgt oft über ein an der Hohlwalze angeordnetes Abtriebsrad und ein mit diesem Abtriebsrad wirkverbundenes Antriebsrad.

Wenn die Walze gelüftet und anschließend wieder angelegt wird, verlagert sie sich, (meist senkt und hebt sie sich) und mit ihr das Abtriebsrad. Im Falle eines Zugmitteltriebes besteht zwar grundsätzlich die Möglichkeit, auch mit Spannrollen zu arbeiten, die eine Abstandsänderung zwischen Antriebsrad und Abtriebsrad kompensieren. Derartige Anordnungen zeigen jedoch Nachteile, wenn größere Verlagerungen (ggf. Anstellwege von 120 mm) ausgeglichen werden müssen oder eine Lastumkehr realisiert werden muss. Auch ist der notwendige Platz oft nicht vorhanden. Hinzu kommt, dass zusätzliche Umlenkungen (mit Wechselbiegung) die Lebensdauer des Zugmittels herabsetzen können.

Aus der US 3,889,334 A ist eine schwimmende Walze bekannt, mit einem Abtriebsrad, das mit einem Antriebsrad kämmt. Das Antriebsrad ist über eine Kupplung mit der Antriebswelle verbunden. Die Antriebswelle ist in einem Getriebegehäuse gelagert, das starr an dem Querhaupt abgestützt ist.

Die US 4,414,890 A zeigt einen Antrieb einer schwimmenden Walze. Die Antriebswelle ist über eine flexible Kupplung mit dem Antriebsrad verbunden. Bei einem Durchbiegen der Hohlwalze und damit Verschwenken des Abtriebsrades kann das Antriebsrad dem Verschwenken folgen, da es pendelgelagert ist.

Die US 4,691,421 A zeigt eine schwimmende Walze, bei der das Antriebsrad als Hohlkörper ausgebildet und mittels zweier Lager in einem Getriebegehäuse gelagert ist. Bei einer Verlagerung der Walze bewegt sich das Getriebegehäuse mit dem Walzenmantel mit.

Die DE 40 33 638 C1 zeigt einen Walzenantrieb, bei dem das Antriebsrad in einem Antriebsgehäuse gelagert ist, welches einerseits über ein Pendellager an der Lagerglocke und andererseits über ein Wälzlager an der Hohlwalze abgestützt ist.

Aus der nachveröffentlichten DE 10 2009 044 725 A1 ist es bekannt, das Antriebsrad an der Walze selbst zu lagern. Allerdings führt die Belastung der Walze im Betrieb dazu, dass sich das Querhaupt durchbiegt. Nachteilig an dieser Anordnung ist, dass die Durchbiegung des Querhaupts zu einer Verschränkung von Antriebsrad und Abtriebsrad führen kann, sofern keine Kompensationsmaßnahmen getroffen wurden.

Die Erfindung hat es sich zur Aufgabe gemacht, eine Walzenanordnung ohne die genannten Nachteile zu schaffen. Diese Aufgabe wird durch die in Anspruch 1 wiedergegebene Walzenanordnung gelöst.

Die erfindungsgemäße Walzenanordnung umfasst eine durchbiegungssteuerbare Walze. Diese weist eine den arbeitenden Walzenumfang bildende umlaufende Hohlwalze auf. Es ist ein feststehendes Querhaupt vorgesehen, welches die Hohlwalze der Länge nach durchgreift und ringsherum Abstand zum Innenumfang der Hohlwalze belässt. Auf das Querhaupt sind an den aus der Hohlwalze hervorragenden Enden äußere Kräfte aufbringbar. Die Walze umfasst eine vorzugsweise am Querhaupt vorgesehene hydraulische Einrichtung zur Abstützung der Hohlwalze am Querhaupt und vorzugsweise an jedem Ende der Hohlwalze ein Lager, auf welchem die Hohlwalze gegenüber dem Querhaupt drehbar abgestützt ist. Es ist ein Antrieb mit einem Antriebsrad und mit einem mit der Hohlwalze verbundenen Abtriebsrad vorgesehen. Das Antriebsrad ist zumindest auch extern, also nicht unmittelbar an Elementen der Walze gelagert. Es ist eine Gegenwalze vorgesehen, die mit der durchbiegungssteuerbaren Walze zusammenwirkt. Die Lagerung des Antriebsrades ist mit dem Lager, auf welchem die Hohlwalze gegenüber dem Querhaupt drehbar abgestützt ist, vorzugsweise mechanisch gekoppelt. Hierdurch ist eine Voraussetzung dafür geschaffen, dass der Abstand zwischen der Achse der Hohlwalze im Bereich des Abtriebsrades (und damit der Achse des Abtriebsrades) und dem Antriebsrad konstant bleibt. Vorrichtungen zur Kompensation einer Abstandsänderung zwischen Antriebsrad und Abtriebsrad, im Falle eines Zugmitteltriebes etwa Spannrollen, können daher entfallen. Aufgrund der externen Lagerung des Antriebsrades neigt sich dieses auch bei Durchbiegung des Querhaupts und hierdurch hervorgerufenen Neigungen von mit dem Querhaupt verbundenen Elementen nicht und verschränkt sich daher nicht gegenüber dem Abtriebsrad. Die Anordnung vereinigt daher die Vorteile einer externen Lagerung des Antriebsrades mit den Vorteilen eines an der Walze gelagerten Antriebsrades.

In der bevorzugten Ausführungsform liegen die Achse der Gegenwalze, die Achse der Walze und die Achse des Antriebsrades zumindest in etwa in einer Ebene, die weiter bevorzugt senkrecht verläuft.

Vorzugsweise ist die Lagerung des Antriebsrades an einer Linearführung angeordnet. Die Bewegungsrichtung der Linearführung verläuft bevorzugt in der Richtung in der die Walze gelüftet wird. Die Walze schleppt hierdurch über die Linearführung aufgrund der Koppelung ihren Antrieb mit. Die Bewegungsrichtung der Linearführung verläuft bevorzugt parallel zu einer gedachten kürzesten Verbindung zwischen der Achse der Walze und der Achse der Gegenwalze. In der Ausführungsform, in der die Achse der Gegenwalze, die Achse der Walze und die Achse des Antriebsrades zumindest in etwa in einer Ebene liegen, verläuft die Bewegungsrichtung der Linearführung bevorzugt parallel zu dieser Ebene, weiter bevorzugt in dieser Ebene.

Die Kopplung erfolgt mittels einer Koppelstange, die bevorzugt mittels eines Gelenkes mit der Lagerung des Antriebsrades und ganz besonders bevorzugt mittels eines weiteren Gelenkes mit dem Lager, auf welchem die Hohlwalze gegenüber dem Querhaupt drehbar abgestützt ist, wirkverbunden ist. Die Gelenke umfassen bevorzugt Drehgelenke. In der Ausführungsform, in der die Achse der Gegenwalze, die Achse der Walze, und die Achse des Antriebsrades zumindest in etwa in einer Ebene liegen, stehen die Drehachsen der Drehgelenke bevorzugt senkrecht zu dieser Ebene.

In der bevorzugten Ausführungsform ist das Lager, mit welchem die Hohlwalze gegenüber dem Querhaupt abgestützt ist, nicht in der Hohlwalze angeordnet, sondern es ist eine vorzugsweise einen Bereich großen Innendurchmessers und einen zum nahe gelegenen Ende der Walze hin axial benachbarten Bereich geringeren Innendurchmessers aufweisende Lagerglocke vorgesehen und die Hohlwalze greift bevorzugt mit einem im Außendurchmesser verringerten axialen Ansatz in den Bereich größeren Innendurchmessers der Lagerglocke ein. Jeweils eine Lagerglocke ist bevorzugt auf jedes Ende des Querhaupts aufgesteckt. Das Lager, auf welchem die Hohlwalze gegenüber dem Querhaupt drehbar abgestützt ist, ist bevorzugt zwischen dem axialen Ansatz und der Lagerglocke angeordnet. Die Hohlwalze ist in dieser Ausführungsform daher nicht unmittelbar auf dem Querhaupt mittels Lagern drehbar abgestützt, sondern mittelbar, über den axialen Ansatz und die Lagerglocke.

Vorzugsweise ist die Lagerung des Antriebsrades mit der Lagerglocke und weiter bevorzugt in Höhe des Lagers gekoppelt. Die Lagerung des Antriebsrades ist also nicht unmittelbar mit dem Lager, auf welchem die Holwalze gegenüber dem Querhaupt drehbar abgestützt ist gekoppelt, sondern mittelbar, über die Lagerglocke. Hierdurch bleibt der Abstand zwischen der Achse der Hohlwalze im Bereich des Abtriebsrades und damit der Achse des Abtriebsrades und dem Antriebsrad konstant, vorausgesetzt, der Versetzungswinkel a, um den sich das Querhaupt im Bereich der Lager bei Belastung der Walze durchbiegt ist klein, also im Bereich von höchstens wenigen Grad.

Die Anordnung kann mehr als zwei Walzen umfassen. Mehr als eine Walze kann durchbiegungssteuerbar und/oder schwimmend sein. Es kann sich um eine oder mehrere Walzen mit innerem Hub handeln.

Vorzugsweise weist die Kopplung eine Kraftübertragungsbegrenzung auf. Hierdurch kann unter anderem, insbesondere in der Ausführungsform, in der das Abtriebsrad und das Antriebsrad mittels eines Zugmittels wirkverbunden sind, eine Überlastung dieses Zugmittels verhindert werden, etwa wenn das Anlegen und Lüften der Walze nicht exakt parallel erfolgt.

Das Antriebsrad ist bevorzugt derart mit einer Drehantriebseinrichtung wirkverbunden, dass die translatorische Bewegung des Antriebsrades, die der Verlagerung der Walze bei dem Lüften und Anlegen folgt, toleriert wird. Es ist das Vorsehen einer Gelenkwelle, einer Schmidt-Kupplung®, einer aufsteckbaren Drehantriebseinrichtung wie etwa eines Getriebe- oder Torquemotors denkbar.

Die Verbiegung der Hohlwalze in Richtung der Gegenwalze ist meist relativ gering und kann dann unberücksichtigt bleiben. Soll die Durchbiegung des Walzenpaares in diese Richtung doch berücksichtigt werden, so ist es möglich, die Lagerung des Antriebsrades auf der Linearführung etwas schräg zu setzen, um einen Ausgleich zu schaffen. Der Winkel zwischen der Bewegungsrichtung der Linearführung und der Achse des Antriebsrades beträgt in dieser Ausführungsform also nicht 90°, sondern über die durch eventuelle Fertigungstoleranzen bedingte Abweichungen hinaus gezielte Schrägstellungen von maximal wenigen Grad.

Es ist sogar denkbar, dieses Schrägsetzten zu automatisieren. In einer bevorzugten Ausführungsform ist der Winkel zwischen der Bewegungsrichtung der Linearführung und der Achse des Antriebsrades daher veränderbar und es ist weiter bevorzugt eine Vorrichtung vorgesehen, die den Winkel zwischen der Bewegungsrichtung der Linearführung und der Achse des Antriebsrades automatisch in Abhängigkeit von der Durchbiegung der Hohlwalze anpasst.

Vorzugsweise beträgt der Biegewinkel, um den sich das Querhaupt im Bereich der Lager, auf welchen die Hohlwalze gegenüber dem Querhaupt drehbar abgestützt ist, bei Belastung der Walze durchbiegt, maximal etwa 1°.

Vorzugsweise sind das Antriebsrad und das Abtriebsrad mit einem Zugmittel, bevorzugt einem Riemen verbunden.

Es ist denkbar, das Antriebsrad zu kühlen, um die Temperatur des Zugmittels begrenzen zu können.

Die Erfindung soll nun anhand eines in den Zeichnungen gezeigten Ausführungsbeispiels näher erläutert werden. Es zeigen ausschnittsweise:
- Fig. 1: schematisch eine teilweise geschnittene Seitenansicht eines Endbereiches einer erfindungsgemäßen Anordnung bei gelüfteter Walze;
- Fig. 2: eine Ansicht wie in Fig. 1, bei angelegten Walzen, jedoch ohne Pressdruck;
- Fig. 3: eine Darstellung wie in Fig. 2, bei Kraftbeaufschlagung;
- Fig. 4: eine geschnittene Seitenansicht eines Endbereiches einer aus dem Stand der Technik bekannten schwimmenden Walze.

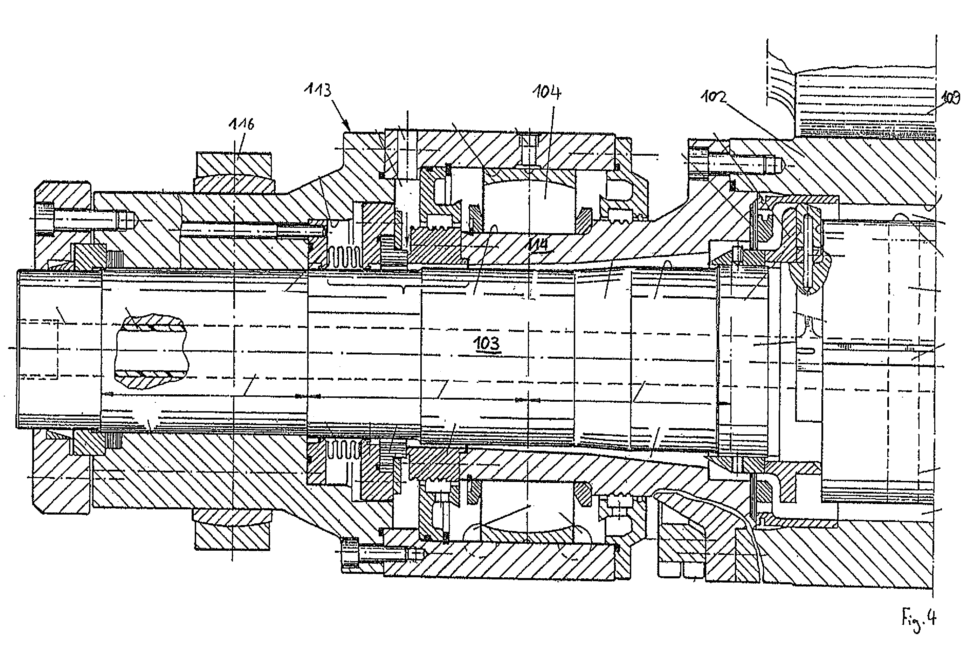

Die erfindungsgemäße Walzenanordnung umfasst eine Walze 1, die als durchbiegungssteuerbare, schwimmende Walze mit einer Druckkammer DK ausgeführt ist. Sie entspricht im Wesentlichen der in Fig. 4 dargestellten, aus dem Stand der Technik bekannten, schwimmenden Walze.

Es ist also ein feststehendes Querhaupt 3 vorgesehen, auf welchem eine Hohlwalze 2 beidseitig drehbar mittels Lager 4, welche als Pendelwälzlager, insbesondere Pendelrollenlager ausgebildet sind, gelagert ist. Die Steuerung der Durchbiegung wird durch eine nicht vollständig im Detail dargestellte hydraulische Einrichtung bzw. hydrostatische Lagervorrichtung bewirkt. Die durchbiegungssteuerbare schwimmende Walze 1 kann beheizbar sein.

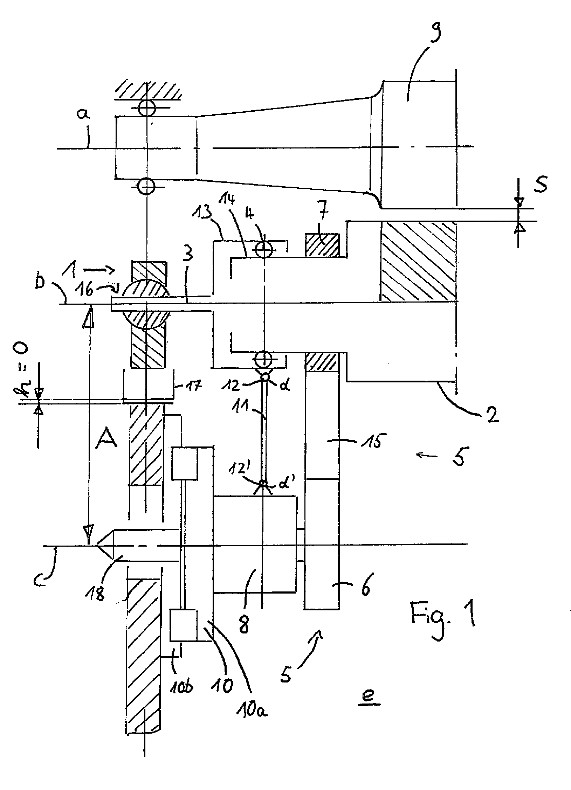

Die Achse a der Gegenwalze 9 und die Achse b der Walze 1 und die Achse c des Antriebsrades 6 sind in einer Ebene e und bei unbelasteter Walze parallel zueinander angeordnet. Die Ebene e entspricht in den Figuren 1 bis 3 der Bildebene und ist senkrecht ausgerichtet.

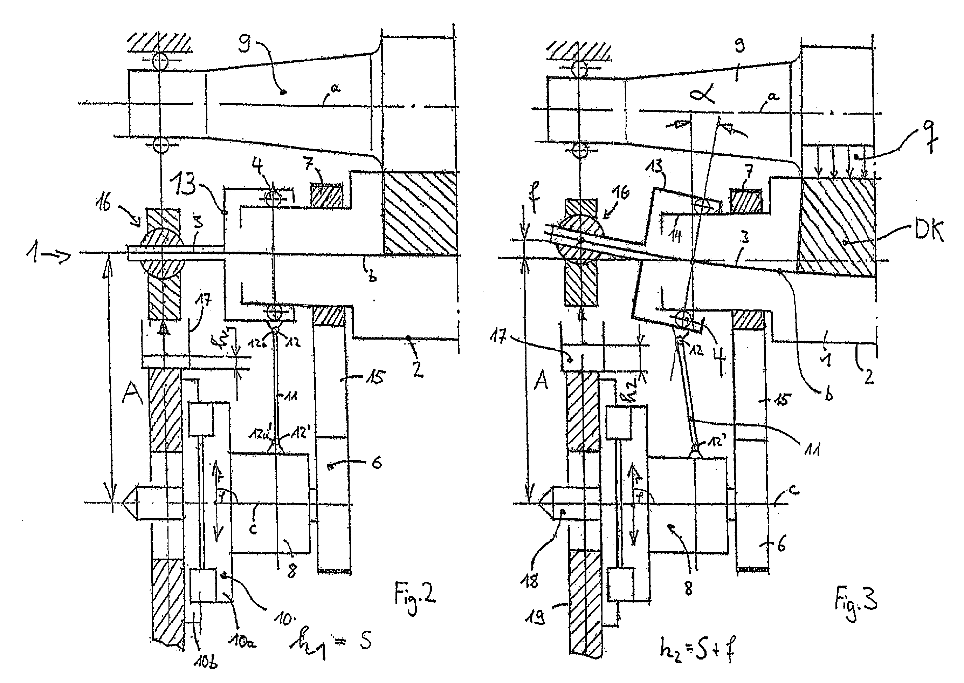

Zwischen der Hohlwalze 2 und einer Gegenwalze 9 wirkt bei belasteter Walze 1 eine einstellbare Linienkraft q. Die Übertragung der Linienkraft q insbesondere über die hydrostatischen Lagerelemente auf das Querhaupt 3 führen zu einer zur Verdeutlichung in Fig. 3 übertrieben dargestellten Durchbiegung des Querhaupts 3. Eine von der Einstellung der Walze 1 abhängige, etwaige Durchbiegung der Hohlwalze 2 ist in den Zeichnungen nicht dargestellt.

Die Hohlwalze 2 ist außen gelagert. Die Außenlagerung hat sich bei beheizten, durchbiegungssteuerbaren Walzen bewährt. Es ist also ein Ansatz 14 vorgesehen, der an den Enden der Hohlwalze 2 angeordnet ist, sowie eine Lagerglocke 13. Die Lagerglocke 13 umgreift den Ansatz 14. Die Lager 4, auf welchen die Hohlwalze gegenüber dem Querhaupt 3 drehbar abgestützt ist, sind außerhalb der Hohlwalze 2 zwischen Ansatz 14 und Lagerglocke 13 angeordnet. Die Lagerglocke 13 ist mit ihrem Bereich geringeren Innendurchmessers auf das Querhaupt 3 aufgesteckt. Das Querhaupt 3 ist mittels Pendellagern 16, die am Außenumfang der Lagerglocke in ihrem Bereich geringeren Innendurchmessers angeordnet sind, gelagert.

Der Antrieb 5 der Hohlwalze 2 weist ein an der Hohlwalze angeordnetes Abtriebsrad bzw. eine Riemenscheibe 7 auf. Dieses ist mit einem Antriebsrad bzw. einer Riemenscheibe 6 mittels eines Riemens 15 verbunden. Es sind keine Spannrollen für den Riemen vorhanden. Das Antriebsrad 6 ist mittels einer Lagerung 8 gelagert. Die Lagerung 8 ist an einer Linearführung 10 angeordnet, die als Schlitten bzw. Wagen 10a ausgebildet ist. Der Schlitten bzw. Wagen 10a gleitet auf einer Schiene 10b am Ständer 19. Die Lagerung 8 ist also über einen Schlitten bzw. Wagen am Ständer 19 geführt. Die in Fig. 2 und 3 durch einen Doppelpfeil dargestellte Bewegungsrichtung r der Linearführung 10 verläuft in der Ebene e und senkrecht. Im gezeigten Ausführungsbeispiel beträgt der Winkel ϕ zwischen der Bewegungsrichtung r und der Achse c des Antriebsrades 90°.

Die Lagerung 8 des Antriebsrades 6 ist mittels einer Koppelstange 11 mit der Lagerglocke 13 in Höhe der Lager 4 gekoppelt. An beiden Enden der Koppelstange 11 sind Drehgelenke 12, 12' vorgesehen. Die Drehachsen d, d' (Fig. 1) der Drehgelenke stehen senkrecht zu der Ebene e. Die Koppelstange 11 ist in der Ebene e angeordnet und verläuft bei nicht belasteter Hohlwalze 2 senkrecht (Figuren 1 und 2).

Fig. 1 zeigt die Anordnung mit Walze 1 im gelüfteten Zustand. Der Zylinder 17 der Hebevorrichtung ist soweit es geht eingefahren ("auf Block"). Der Hub h der Walze 1, mit anderen Worten die Ausfahrhöhe der Hebevorrichtung ist in dieser Situation gleich 0. Zwischen der Gegenwalze 9 und der Hohlwalze 2 ist ein Abstand s vorhanden.

Fig. 2 zeigt die Anordnung mit angelegten Walzen. Der Zylinder 17 der Hebevorrichtung ist soweit ausgefahren, dass der zuvor vorhandene Abstand s zwischen den Walzen verschwunden ist. Auf der Hohlwalze 2 lastet jedoch noch keine Linienkraft q. Der Hub h1 der Walze 1 ist in dieser Situation genauso groß wie der zuvor vorhandene Abstand s zwischen den beiden Walzen. Während des Hebevorgangs hat die Walze 1 das Antriebsrad 6 mittels der Koppelstange 11 "mitgeschleppt". Der Abstand A zwischen dem Abtriebsrad 7 und dem Antriebsrad 6 ist daher trotz Verlagerung des Abtriebsrades 7 gleich geblieben.

Fig. 3 zeigt die Situation bei auf die Hohlwalze 2 wirkender Linienkraft q. Es wirken Verformungskräfte, die das Querhaupt 3 nach unten durchbiegen. Der Zylinder 17 der Hebevorrichtung ist um den auftretenden Versatz f zwischen der Achse der Pendellager 16 und der Achse der Hohlwalze 2 weiter ausgefahren, als bei der in Fig. 2 dargestellten Situation. Der Hub h2 der Walze 1 bei der in Fig. 3 dargestellten Situation beträgt daher s plus f. Auch in dieser Situation sorgt die Ankopplung des Lagers 4 mit der Lagerung 8 des Antriebsrades 6, die als Ankopplung der Lagerglocke 13 in der Höhe des Lagers 4 mit der Lagerung 8 des Antriebsrades 6 ausgeführt ist, dafür, dass der Abstand A zwischen dem Abtriebsrad 7 und dem Antriebsrad 6 nahezu konstant bleibt, jedenfalls solange der Biegewinkel α, um den sich das Querhaupt 3 im Bereich der Lager 4 bei Belastung der Walze 1 durchbiegt, kleiner als 1° ist.

Zur einwandfreien Funktion der in den Figuren 1 bis 3 gezeigten erfindungsgemäβen Anordnung sollten folgende Randbedingungen erfüllt sein: Der Nip biegt sich nicht allzu stark nach oben durch (hohes Flächenträgheitsmoment der Gegenwalze 9), der Walzenspalt liegt waagerecht und rechtwinklig zu den Ständern 19 der Walzen und das Anlegen und Lüften der durchbiegungssteuerbaren Walze 1 erfolgt exakt parallel. Zur Gewährleistung der zuletzt genannten Randbedingung ist es denkbar, einen Stromteiler oder eine Gleichlaufsteuerung vorzusehen.

Damit der in den Zeichnungen nicht dargestellte Antrieb des Antriebrades 6 dem vertikalen Hub der Antriebswelle 18 des Antriebsrades 6 folgen kann, kann eine in den Zeichnungen nicht dargestellte Gelenkwelle, eine Schmidt-Kupplung® oder ein aufsteckbarer Getriebe- oder Torquemotor zum Einsatz kommen.

Fig. 4 zeigt eine geschnittene Seitenansicht eines Endbereiches einer aus dem Stand der Technik bekannten schwimmenden Walze. Den Elementen in den Fig. 1 bis 3 entsprechende Elemente der Fig. 4 tragen um 100 erhöhte Bezugsziffern, verglichen mit den Fig. 1 bis 3. Die Holwalze 102, der Ansatz 114, die Lagerglocke 113, das Lager 104 und das Querhaupt 103 mit seiner Pendellagerung 116 sowie die Gegenwalze 109 sind deutlich zu erkennen.

### Bezugszeichenliste:

- 1: Walze
- 2, 102: Hohlwalze
- 3, 103: Querhaupt
- 4, 104: Lager
- 5: Antrieb
- 6: Antriebsrad
- 7: Abtriebsrad
- 8: Lagerung des Antriebsrads
- 9, 109: Gegenwalze
- 10: Linearführung
- 10a: Schlitten
- 10b: Schiene
- 11: Koppelstange
- 12, 12': Gelenk
- 13, 113: Lagerglocke
- 14, 114: Ansatz
- 15: Riemen
- 16, 116: Pendellager
- 17: Zylinder
- 18: Antriebswelle des Antriebsrades
- 19: Ständer
- a: Achse der Gegenwalze
- b: Achse der durchbiegungssteuerbaren Walze
- c: Achse des Antriebsrades
- e: Ebene
- d, d': Drehachsen der Drehgelenke
- r: Bewegungsrichtung der Linearführung
- ϕ: Winkel
- h: Hub der Walze im gelüfteten Zustand
- h1: Hub der Walze bei angelegter Walze jedoch ohne Pressdruck
- h2: Hub der Walze bei Kraftbeaufschlagung
- s: Walzenabstand in gelüftetem Zustand
- f: Versatz der Hohlwalzenachse zur Pendellagerachse
- A: Abstand
- q: Linienkraft
- DK: Druckkammer
- α: Biegewinkel um den sich das Querhaupt im Bereich der Lager bei Belastung der Walze durchbiegt

## Patentansprüche

1. Walzenanordnung
mit einer Walze (1) mit einer den arbeitenden Walzenumfang bildenden umlaufenden Hohlwalze (2), mit einem diese der Länge nach durchgreifenden, ringsherum Abstand zum Innenumfang der Hohlwalze (2) belassenden feststehenden Querhaupt (3), auf welches an den aus der Hohlwalze (2) hervorragenden Enden äußere Kräfte aufbringbar sind, mit einer vorzugsweise am Querhaupt (3) vorgesehenen hydraulischen Einrichtung zur Abstützung der Hohlwalze (2) am Querhaupt (3) und mit einem Lager (4), auf welchem die Hohlwalze gegenüber dem Querhaupt (3) drehbar abgestützt ist,
mit einem Antrieb (5) mit einem Antriebsrad (6) und mit einem, mit der Hohlwalze (2) verbundenen Abtriebsrad (7), wobei das Antriebsrad (6) zumindest auch extern, also nicht unmittelbar an Elementen der Walze (1) gelagert ist, wobei die Lagerung (8) des Antriebsrades (6) mit dem Lager (4) gekoppelt ist,
und mit einer Gegenwalze (9), **dadurch gekennzeichnet, dass** die Kopplung mittels einer Koppelstange (11) erfolgt.

2. Walzenanordnung nach Anspruch 1, **dadurch gekennzeichnet, dass** die Achse (a) der Gegenwalze (9), die Achse (b) der Walze (1) und die Achse (c) des Antriebsrades (6) zumindest in etwa in einer Ebene (e) liegen.

3. Walzenanordnung nach Anspruch 2, **dadurch gekennzeichnet, dass** die Ebene (e) senkrecht verläuft.

4. Walzenanordnung nach einem der Ansprüche 1 bis 3, **dadurch gekennzeichnet, dass** die Lagerung (8) des Antriebsrades (6) an einer Linearführung (10) angeordnet ist.

5. Walzenanordnung nach einem der Ansprüche 1 bis 4, **dadurch gekennzeichnet, dass** die Koppelstange (11) mittels eines Gelenks (12) mit der Lagerung (8) des Antriebsrades und mittels eines weiteren Gelenks (12') mit dem Lager (4) wirkverbunden ist.

6. Walzenanordnung nach einem der Ansprüche 1 bis 5, **dadurch gekennzeichnet, dass** eine einen Bereich großen Innendurchmessers und einen zum nahe gelegenen Ende der Walze hin axial benachbarten Bereich geringeren Innendurchmessers aufweisende Lagerglocke (13) vorgesehen ist und die Hohlwalze (2) mit einem im Außendurchmesser verringerten axialen Ansatz (14) in den Bereich größeren Innendurchmessers der Lagerglocke (13) eingreift und das Lager (4) zwischen axialem Ansatz (14) und der Lagerglocke (13) angeordnet ist.

7. Walzenanordnung nach Anspruch 6, **dadurch gekennzeichnet, dass** die Lagerung (8) des Antriebsrades (6) mit der Lagerglocke (3) in Höhe des Lagers (4) gekoppelt ist.

8. Walzenanordnung nach einem der Ansprüche 1 bis 7, **dadurch gekennzeichnet, dass** die Kopplung eine Kraftübertragungsbegrenzung aufweist.

9. Walzenanordnung nach einem der Ansprüche 1 bis 8, **dadurch gekennzeichnet, dass** das Antriebsrad (6) derart mit einer Drehantriebseinrichtung wirkverbunden ist, dass eine translatorische Bewegung des Antriebsrades (6) toleriert wird.

10. Walzenanordnung nach einem der Ansprüche 1 bis 9, **dadurch gekennzeichnet, dass** die Lagerung (8) des Antriebsrades (6) an einer Linearführung (10) angeordnet ist und dass der Winkel (ϕ) zwischen der Bewegungsrichtung (r) der Linearführung (10) und der Achse (c) des Antriebsrades (6) nicht 90° beträgt.

11. Walzenanordnung nach einem der Ansprüche 1 bis 9, **dadurch gekennzeichnet, dass** die Lagerung (8) des Antriebsrades (6) an einer Linearführung (10) angeordnet ist und dass der Winkel (ϕ) zwischen der Bewegungsrichtung (r) der Linearführung (10) und der Achse (c) des Antriebsrades (6) veränderbar ist und eine Vorrichtung vorgesehen ist, die den Winkel (ϕ) zwischen der Bewegungsrichtung (r) der Linearführung (10) und der Achse (c) des Antriebsrades (6) automatisch in Abhängigkeit von der Durchbiegung der Hohlwalze (2) anpasst.

12. Walzenanordnung nach einem der Ansprüche 1 bis 11, **dadurch gekennzeichnet, dass** der maximal auftretende Biegewinkel (α), um den sich das Querhaupt im Bereich der Lager (4) bei Belastung der Walze (1) durchbiegt etwa 1° beträgt.

13. Walzenanordnung nach einem der Ansprüche 1 bis 12, **dadurch gekennzeichnet, dass** das Antriebsrad (6) und das Abtriebsrad (7) mit einem Riemen (15) verbunden sind.

14. Walzenanordnung nach einem der Ansprüche 1 bis 13, **dadurch gekennzeichnet, dass** das Antriebsrad (6) gekühlt ist.

## Claims

1. A roll assembly,
comprising a roll (1) having a revolving hollow roll (2) forming the working roll circumference, comprising a stationary cross head (3) that passes lengthwise through said hollow roll and leaves a distance all around to the inner circumference of the hollow roll (2), it being possible to apply external forces to said cross head at the ends protruding from the hollow roll (2), comprising a hydraulic arrangement provided preferably on the cross head (3) in order to support the hollow roll (2) on the cross head (3), and comprising a bearing (4), on which the hollow roll is supported rotatably relative to the cross head (3),
comprising a drive (5) having a drive wheel (6) and having an output wheel (7) connected to the hollow roll (2), the drive wheel (6) being mounted at least also externally, i.e. not directly, on elements of the roll (1), the mounting (8) of the drive wheel (6) being coupled to the bearing (4),
and comprising a counter roll (9), **characterized in that** the coupling is provided by means of a coupling rod (11).

2. The roll assembly according to claim 1, **characterized in that** the axis (a) of the counter roll (9), the axis (b) of the roll (1), and the axis (c) of the drive wheel (6) lie at least approximately in one plane (e).

3. The roll assembly according to claim 2, **characterized in that** the plane (e) extends perpendicularly.

4. The roll assembly according to any one of claims 1 to 3, **characterized in that** the mounting (8) of the drive wheel (6) is arranged on a linear guide (10).

5. The roll assembly according to any one of claims 1 to 4, **characterized in that** the coupling rod (11) is operatively connected by means of a hinge (12) to the mounting (8) of the drive wheel and by means of a further hinge (12') to the bearing (4).

6. The roll assembly according to any one of claims 1 to 5, **characterized in that** there is provided a bearing bell (13) having a region of large inner diameter and a region of smaller inner diameter disposed axially adjacently towards the nearby end of the roll and the hollow roll (2) engages via an axial attachment (14) of reduced outer diameter in the region of larger inner diameter of the bearing bell (13) and the bearing (4) is arranged between the axial attachment (14) and the bearing bell (13).

7. The roll assembly according to claim 6, **characterized in that** the mounting (8) of the drive wheel (6) is coupled to the bearing bell (3) level with the bearing (4).

8. The roll assembly according to any one of claims 1 to 7, **characterized in that** the coupling has a force transmission delimitation.

9. The roll assembly according to any one of claims 1 to 8, **characterized in that** the drive wheel (6) is operatively connected to a rotary drive arrangement in such a way that a movement in translation of the drive wheel (6) is tolerated.

10. The roll assembly according to any one of claims 1 to 9, **characterized in that** the mounting (8) of the drive wheel (6) is arranged on a linear guide (10), and **in that** the angle (ϕ) between the direction of movement (r) of the linear guide (10) and the axis (c) of the drive wheel (6) is not 90°.

11. The roll assembly according to any one of claims 1 to 9, **characterized in that** the mounting (8) of the drive wheel (6) is arranged on a linear guide (10), and **in that** the angle (ϕ) between the direction of movement (r) of the linear guide (10) and the axis (c) of the drive wheel (6) can be changed and a device is provided which automatically adapts the angle (ϕ) between the direction of movement (r) of the linear guide (10) and the axis (c) of the drive wheel (6) depending on the deflection of the hollow roll (2).

12. The roll assembly according to any one of claims 1 to 11, **characterized in that** the maximum angle of bend (α) by which the cross head deflects in the region of the bearing (4) under the load of the roll (1) is approximately 1°.

13. The roll assembly according to any one of claims 1 to 12, **characterized in that** the drive wheel (6) and the output wheel (7) are connected to a belt (15).

14. The roll assembly according to any one of claims 1 to 13, **characterized in that** the drive wheel (6) is cooled.

## Revendications

1. Agencement de cylindres comprenant
un cylindre (1) pourvu d'un cylindre creux rotatif (2) formant la périphérie de travail, d'une traverse immobile (3) qui traverse longitudinalement le cylindre creux et reste tout autour à distance de la circonférence intérieure du cylindre creux (2) et sur laquelle des forces extérieures peuvent être appliquées aux extrémités saillant du cylindre creux (2), d'un dispositif hydraulique prévu de préférence au niveau de la traverse (3) et destiné à supporter le cylindre creux (2) au niveau de la traverse (3) et d'un palier (4) sur lequel le cylindre creux est supporté à rotation par rapport à la traverse (3),
un entraînement (5) pourvu d'une roue d'entraînement (6) et d'une roue de sortie (7) reliée au cylindre creux (2), la roue d'entraînement (6) étant montée au moins également à l'extérieur, donc non directement sur des éléments du cylindre (1), le support (8) de la roue d'entraînement (6) étant accouplé au palier (4),
et un cylindre antagoniste (9), **caractérisé en ce que** l'accouplement est effectué au moyen d'une tige d'accouplement (11).

2. Agencement de cylindres selon la revendication 1, **caractérisé en ce que** l'axe (a) du cylindre antagoniste (9), l'axe (b) du cylindre (1) et l'axe (c) de la roue d'entraînement (6) sont situés au moins approximativement dans un plan (e).

3. Agencement de cylindres selon la revendication 2, **caractérisé en ce que** le plan (e) s'étend perpendiculairement.

4. Agencement de cylindres selon l'une des revendications 1 à 3, **caractérisé en ce que** le support (8) de la roue d'entraînement (6) est disposé au niveau d'un guide linéaire (10).

5. Agencement de cylindres selon l'une des revendications 1 à 4, **caractérisé en ce que** la tige d'accouplement (11) est reliée fonctionnellement au support (8) de la roue d'entraînement au moyen d'une articulation (12) et au palier (4) au moyen d'une autre articulation (12').

6. Agencement de cylindres selon l'une des revendications 1 à 5, **caractérisé en ce qu'**il est prévu une coupelle de palier (13) qui comporte une région de grand diamètre intérieur et une région de petit diamètre intérieur axialement adjacente en direction de l'extrémité proche du cylindre et **en ce que** le cylindre creux (2) s'engage avec un téton axial (14), de diamètre extérieur réduit, dans la région de grand diamètre intérieur de la coupelle de palier (13) et le palier (4) est disposé entre un téton axial (14) et la coupelle de palier (13).

7. Agencement de cylindres selon la revendication 6, **caractérisé en ce que** le support (8) de la roue d'entraînement (6) est accouplé à la coupelle de palier (3) à hauteur du palier (4).

8. Agencement de cylindres selon l'une des revendications 1 à 7, **caractérisé en ce que** l'accouplement comprend une limite de transmission de force.

9. Agencement de cylindres selon l'une des revendications 1 à 8, **caractérisé en ce que** la roue d'entraînement (6) est reliée fonctionnellement à un dispositif d'entraînement en rotation et **en ce qu'**un mouvement de translation de la roue d'entraînement (6) est toléré.

10. Agencement de cylindres selon l'une des revendications 1 à 9, **caractérisé en ce que** le support (8) de la roue d'entraînement (6) est disposé sur un guide linéaire (10), et **en ce que** l'angle (ϕ) entre la direction de déplacement (r) du guide linéaire (10) et l'axe (c) de la roue d'entraînement (6) est de 90°.

11. Agencement de cylindres selon l'une des revendications 1 à 9, **caractérisé en ce que** le support (8) de la roue d'entraînement (6) est disposé sur un guide linéaire (10), et **en ce que** l'angle (ϕ) entre la direction de déplacement (r) du guide linéaire (10) et l'axe (c) de la roue d'entraînement (6) est variable et **en ce qu'**un dispositif est prévu qui adapte l'angle (ϕ) entre la direction de déplacement (r) du guide linéaire (10) et l'axe (c) de la roue d'entraînement (6) automatiquement en fonction de la flexion du cylindre creux (2).

12. Agencement de cylindres selon l'une des revendications 1 à 11, **caractérisé en ce que** l'angle de flexion maximal (α), duquel la traverse fléchit dans la région du palier (4) sous la contrainte du cylindre (1), est d'environ 1°.

13. Agencement de cylindres selon l'une des revendications 1 à 12, **caractérisé en ce que** la roue d'entraînement (6) et la roue de sortie (7) sont reliées par une courroie (15).

14. Agencement de cylindres selon l'une des revendications 1 à 13, **caractérisé en ce que** la roue d'entraînement (6) est refroidie.
